# EUROPEAN PATENT SPECIFICATION

(11) **EP 4 451 248 B1**
(45) Date of publication and mention of the grant of the patent: **08.10.2025**
(21) Application number: 24165957.2
(22) Date of filing: 25.03.2024
(51) Int. Cl.: G09B 23/28, G09B 23/30

(54) **SIMULATION SYSTEM FOR AESTHETIC MEDICINE TREATMENTS**
SIMULATIONSSYSTEM FÜR ÄSTHETISCHE MEDIZIN BEHANDLUNGEN
SYSTÈME DE SIMULATION POUR TRAITEMENTS DE MÉDECINE ESTHÉTIQUE

(30) Priority: 19.04.2023 IT 202300007629
(43) Date of publication of application: 23.10.2024
(73) Proprietor: Accurate S.r.l., 47522 Parma (PR) (IT)
(72) Inventor: Gabellini, Claudio, Parma (IT); Angelotti, Patrizia, Parma (IT); Pirini, Marco, Parma (IT)
(74) Representative: Perani & Partners S.p.A.

(56) References cited:
- US-A1- 2015 348 443
- US-A1- 2018 374 390

## Description

### FIELD OF THE INVENTION

The present invention relates to a simulation system for aesthetic medicine treatments. This system is particularly useful in hospital and university settings.

The present invention also relates to a method for simulating aesthetic medicine treatments by means of the aforementioned simulation system.

### Description of the prior art

For many aesthetic medicine treatments, especially concerning the face, the injection of particular liquid products that can be classified into two main categories is required: neuromodulators, able to relax the muscles of the face and neck through the use of botulinum toxin, as in the example of the drug Botox, and dermal fillers, with a filling action, as in the example of compounds based on hyaluronic acid.

In particular, systems are known that allow to simulate the injection of liquid products on a dummy, for example. In this way, people in charge, for example, young doctors and trainees, can simulate the treatment in order to acquire manual skills and grow in skills.

It is known, in the state of the art, the realization of systems for simulating aesthetic medicine treatments that use a puncturable dummy, capable of emulating an anatomical structure adapted to receive fluid during the injection of a drug. In greater detail, the known dummy for the simulation of such treatments simulates, for example, a human head. **In** particular, the known dummies are made by simulating the position and the properties of the different human tissues present in the simulated anatomical structure. In detail, the known dummies that simulate a head have bone, muscle and epidermal tissue.

In the state of the art, systems for the simulation of aesthetic medicine treatments are disclosed, for example, from documents US 20150348443 A1 and US 2018374390 A1.

Such systems for the simulation further comprise a syringe provided with a needle and containing a fluid to be injected into the dummy. To obtain greater simulation fidelity, US document 20150348443 A1 shows a system, positioned upstream of the syringe, adapted to simulate different viscosities of the fluid contained in the syringe. In particular, it is known to realize a braking device with controllable friction, capable of providing adequate resistance to simulate the viscosity of the drug used in such treatments, such as, for example, a drug based on botulinum toxin or hyaluronic acid, and the resistance provided by the anatomical structures involved.

In addition, in order to minimize the leakage of liquid from the dummy into which the fluid has been injected, again document US 20150348443 A1 shows a fluid recovery system in fluid communication with the dummy undergoing the injection. In greater detail, the document shows tanks put in fluid communication with the various layers of the dummy and adapted to receive the fluid injected in the various layers.

It is also known in the art to realize systems that adopt techniques for tracking the position of the needle by means of appropriate sensors, in order to verify the insertion of the same in the correct position inside the dummy. In detail, document US 201815979260 A1 shows movement tracking techniques by means of magnetic systems, by means of cameras or by means of accelerometers. In addition, it is also known to use display systems for displaying a model of the dummy and the position of the needle with respect to the model.

### Problems of the prior art

In the state of the art, however, the known systems for simulating aesthetic medicine treatments that simulate injections on a dummy by means of a syringe, require collection systems for the injected liquid, which would otherwise come out of the dummy once the needle is extracted. As a result, the dummy has a high structural and construction complexity. In addition, the repeated injection of liquids into the dummy significantly affects the durability of the dummy itself, requiring its continuous replacement and a consequent increase in the total costs of the system.

Alternatively, the known simulation systems can provide for the use of non-puncturable, and therefore less realistic, dummies, or the simulation of injections solely by inserting the needle into the dummy and the consequent tracking of the position and depth of the needle by means of a light stimulus associated with the needle. In this way, however, there is not a real feeling of the liquid injection and, therefore, the simulation is less realistic and with a less effective training function.

### SUMMARY OF THE INVENTION

Aim of the invention in question is to realize a simulation device capable of overcoming the drawbacks of the prior art mentioned above.

In particular, aim of the present invention is to realize a simulation system capable of simulating aesthetic medicine treatments that provide for the injection or the aspiration of fluid from a synthetic anatomical structure without altering its durability.

The technical task set and the objects specified are substantially achieved by a simulation system comprising the technical features set out in one or more of the appended claims.

### Advantages of the invention

Thanks to an embodiment, it is possible to obtain a simulation system for aesthetic medicine treatments comprising a synthetic anatomical structure, a syringe provided with a needle in order to penetrate the synthetic anatomical structure and comprising flow diverting means to convey the fluid from the syringe to a tank outside the synthetic anatomical structure through connection means.

Advantageously, the needle is separated and fluid-dynamically isolated from the inner cavity of the barrel of the syringe in which the fluid is contained, such that it cannot flow inside the needle but is diverted by the diverting means into the connection means. In this way, the needle has the sole function of puncturing the dummy during the simulation. Consequently, the fluid is not injected inside the synthetic anatomical structure, which maintains a high durability without diminishing the credibility or realism of the simulation.

Thanks to an embodiment, it is possible to realize a simulation system comprising an electric motor adapted to rotate a rotating shaft provided with a cam. Advantageously, the cam is capable of at least partially compressing and throttling a pipe that is at least partly compressible of the connection means, in such a way as to modify the resistance provided by the pipe to the flow and simulate different viscosities of the injected or aspirated fluid.

Thanks to an embodiment, it is possible to provide a simulation system comprising display means for displaying a three-dimensional model representative of the synthetic anatomical structure and of the needle and syringe used. Advantageously, it is possible to display on the display means, in real time or retrospectively, the injection and/or aspiration procedure carried out.

Thanks to an embodiment, it is possible to realize a method for simulating aesthetic medicine treatments that allows to simulate an injection procedure on a synthetic anatomical structure without the need to introduce liquids in its inside.

### BRIEF DESCRIPTION OF THE DRAWINGS

The features and advantages of the present invention will become apparent from the following detailed description of a possible practical embodiment thereof, illustrated by way of non-limiting example in the accompanying drawings, in which:
- figure 1 shows a simulation system according to the present invention;
- figure 2 shows a detail of the simulation system of figure 1;
- figure 3 shows schematically the simulation system of figure 1.

### DETAILED DESCRIPTION

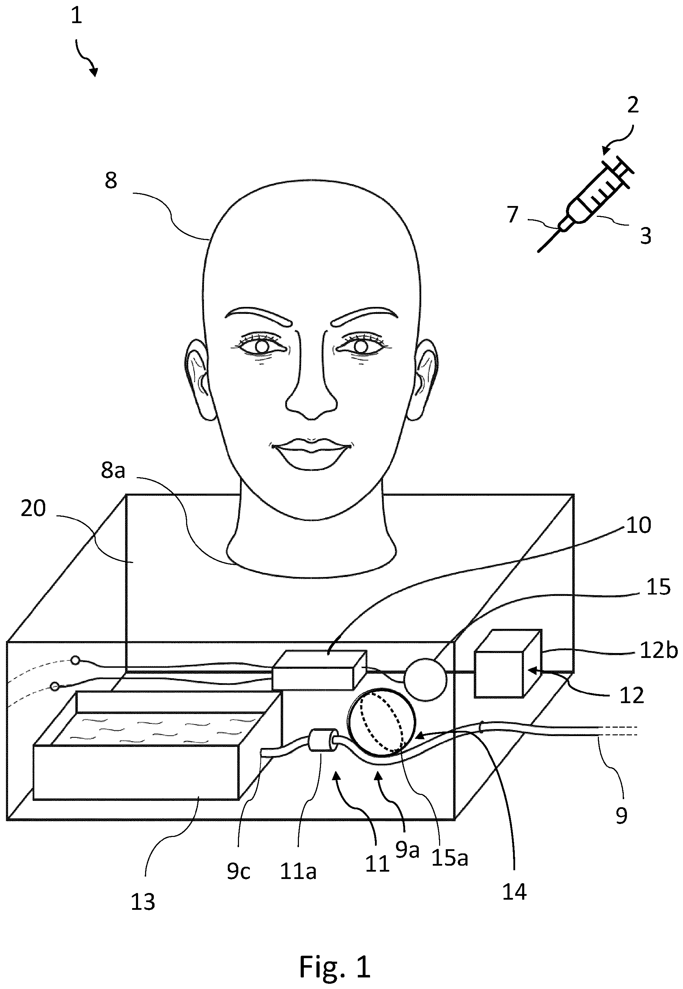

The present invention relates to a simulation system 1 for aesthetic medicine treatments, illustrated in figure 1, and a relative simulation method. With particular reference to the preferred embodiment of the invention, and by way of example only, the treatments of aesthetic medicine, or surgery, to be simulated can comprise injections of liquids, including fillers or botulinum toxin-based drugs, for treating facial imperfections.

The simulation system 1 of the present invention comprises a syringe 2, preferably having a capacity between 1 and 5 ml, more preferably 1 ml.

The syringe 2 comprises a barrel 3 adapted to receive and contain fluid. The barrel 3 has a proximal portion 30a, comprising an opening 4 for the entry and/or exit of fluid and comprising a respective proximal end 3a, and an opposite distal portion 30b, comprising a respective distal end 3b. The barrel 3 comprises an inner cavity 30 defined between the proximal portion 30a and the distal portion 3b.

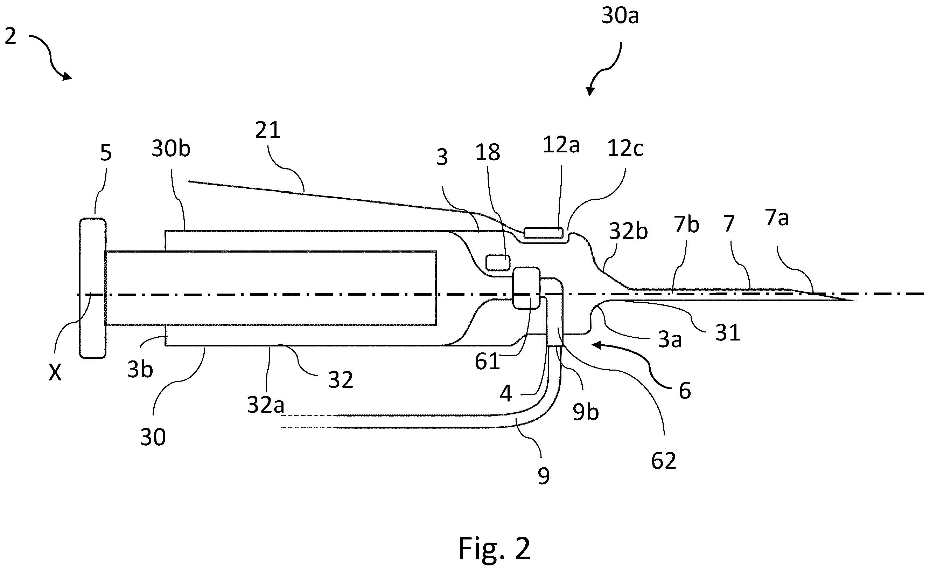

The barrel 3 of the syringe 2 further comprises flow diverting means 6, illustrated in figure 2, which extend inside the proximal portion 30a of the cylinder 3 to put the inner cavity 30 in fluid communication with the opening 4.

The syringe 2 comprises a plunger 5, preferably insertable into the inner cavity 30 of the barrel 3 through the distal portion 30b, axially slidable inside the barrel 3 itself. The plunger 5 can slide axially towards the proximal portion 30a for injecting the fluid, contained in the barrel 3, through the opening 4 for the entry and/or exit of fluid, or axially towards the distal portion 3b for aspirating the fluid inside the barrel 3 through the opening 4 for the entry and/or exit of fluid.

It is worth noting that the simulation system 1 allows carrying out both simulations of treatments relative to fluid injections and simulations of treatments relative to fluid aspiration. In greater detail, in the medical treatments it is known, before injecting liquids, to perform a brief suction action in order to make sure that no liquids are injected into blood vessels. The simulation system 1, therefore, also allows to simulate this suction practice prior to the injection practice.

The simulation system 1 further comprises a needle 7 extending between a first sharp end 7a and an opposite second end 7b constrained to the proximal end 3a of the proximal portion 30a of the barrel 3 in a position distinct from the opening 4. In addition, the needle 7 is separated from the inner cavity 30 of the barrel 3 and the diverting means 6, as is visible in figure 2. In particular, the inner cavity 30 and the diverting means 6 of the barrel 3 are fluid-tight with respect to the needle 7.

Within the scope of the present invention, with needle reference is made to a tubular device, used for injections or collections of liquids, having an end configured to penetrate a synthetic structure mimicking a human tissue. Therefore, for the purposes of the present invention, with needle it is meant both a syringe needle and a cannula usable in aesthetic medicine treatments, adapted to perform the same function as a needle.

Preferably, the needle 7 has a length equal to or less than 5 cm, so as to faithfully reproduce the needles or cannulas used in the aforementioned aesthetic medicine treatments. Advantageously, the needle 7 may comprise a commercially available needle that can be used in the aesthetic medicine treatments. Alternatively, the needle 7 may comprise a needle modified in any manner. By way of example, the needle 7 may be without cavity and/or may comprise a closed end adapted to prevent the passage of fluid and/or may be sensed.

Always preferably, as further detailed in the following of the present description, the simulation system 1 further comprises a spatial tracking sensor 12a, operatively coupled to the needle 7 for tracking the position of the needle 7. In greater detail, the spatial tracking sensor 12a is integral to the syringe 2 and axial to the barrel 3.

The simulation system 1 comprises a puncturable synthetic anatomical structure 8, shown in figure 1. The needle 7 is configured to at least partially penetrate the synthetic anatomical structure 8 by means of the first sharp end 7a. It should be noted that, as is known for treatments involving injections or aspirations, the needle 7 penetrates the synthetic anatomical structure by means of the first end 7a with consequent insertion of a pre-established length of the needle 7 into the synthetic anatomical structure. The pre-established length is preferably established a priori according to the type of treatment to be simulated and to the optimal injection depth for such a treatment.

The simulation system 1 comprises a tank 13 adapted to contain a predefined quantity of fluid, preferably 1 ml. The simulation system 1 further comprises connection means 9 connected to the tank 13 and to the opening 4 and configured to put the inner cavity 30 of the barrel 3 in fluid communication with the tank 13, preferably through the diverting means 6 of the barrel 3.

Advantageously, it is therefore possible to simulate the injection of fluid into a synthetic anatomical structure 8, without actually introducing liquids into the synthetic anatomical structure 8, since the needle 7 is fluidically separated from the inner cavity 30 of the barrel 3. In this way, the needle 7 has the sole function of puncturing the dummy during the simulation, while the injected fluid is diverted into the tank 13 by the diverting means 6. It follows that it is possible to obtain a high durability of the synthetic anatomical structure 8 itself, since the repeated introduction of liquid into it would jeopardise the durability of the materials used.

Still advantageously, the simulation system 1 according to the present invention allows to exploit a simplified design of the synthetic anatomical structure 8 that does not require liquid recovery systems.

The simulation system 1 further comprises a processing unit 10 which, as will be discussed in detail below, is preferably configured to monitor at least the position of the needle 7 with respect to the synthetic anatomical structure 8. Preferably, as detailed in the following of the present description, the processing unit 10 is placed in signal communication with the spatial tracking sensor 12a to track at least the position of the needle 7 with respect to the synthetic anatomical structure 8.

The simulation system 1 further comprises flow monitoring means 11 in signal communication with the processing unit 10 and configured to monitor the flow relative to the injection and/or to the aspiration of fluid through the opening 4.

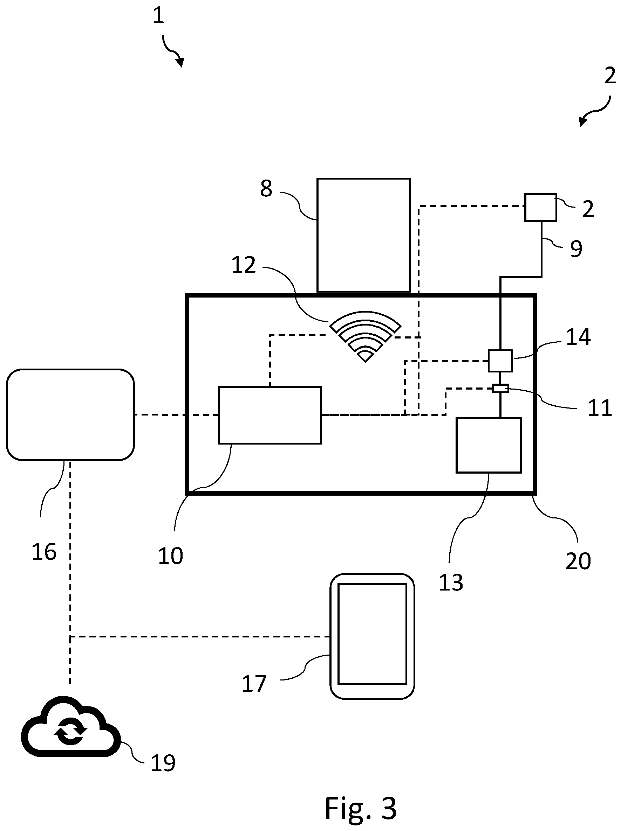

According to the preferred embodiment of the invention, shown in figures 1 and 3, the simulation system 1 comprises a container 20, which is adapted to contain at least in part the electronic component of the system and at least in part the fluid-dynamic component of the system. Preferably, the container 20 is positioned at a lower portion 8a of the synthetic anatomical structure 8 in an integral manner and, always preferably, is constrained to the synthetic anatomical structure 8 at the lower portion 8a.

Always according to the preferred embodiment of the invention, the processing unit 10 comprises a control unit, i.e. microprocessor or any computer, not illustrated, capable of receiving, analysing or processing and transmitting data and/or signals. Always preferably, the processing unit 10 comprises a simulation unit 16 placed in signal communication with the control unit and adapted to receive data from the control unit. Still preferably, the control unit is positioned inside the container 20 and is placed in signal communication with at least the monitoring members 11 and with the needle 7, while the simulation unit 16 is preferably outside the container 20 and usable by a user U.

In the course of the present invention, by signal communication between various components it is meant a wireless connection or, alternatively, a connection via connection means, such as, for example, cables and/or USB sockets, preferably positioned at least in part inside the container 20.

In accordance with the preferred embodiment of the invention, shown in figure 1, the synthetic anatomical structure 8 comprises a human head dummy, comprising a plurality of overlapping tissues, or layers, adapted to faithfully reproduce the consistency and viscosity of the simulated real tissues. In greater detail, the synthetic anatomical structure 8 comprises synthetic tissues, or layers, adapted to reproduce the skin tissue, muscle tissue and bone tissue of a head. Preferably, the tissues of the synthetic anatomical structure 8 that reproduce the skin and/or muscle tissue are made of silicone material, such as, for example, silicone or silicone gel. The tissue adapted to reproduce the bone tissue, on the other hand, is made by means of a bone insert with high hardness.

It is worth noting that the synthetic anatomical structure 8 according to the present invention allows to obtain a realistic simulation of the feeling of fluid injection and/or aspiration and of the manual skill necessary for the injection and/or aspiration procedures.

It is also worth noting that the synthetic anatomical structure 8 has a high resilience and durability, so that it can withstand at least a thousand punctures. Optionally, the synthetic anatomical structure 8 of the simulation system 1 can be replaced after prolonged use with a further synthetic anatomical structure 8 according to the present description, in order to guarantee the correct and adequate properties of the silicone materials used.

In accordance with the preferred embodiment of the invention, the inner cavity 30 of the barrel 3, the diverting means 6 of the barrel 3, the connection means 9 and the tank 13 define a closed fluid-dynamic circuit, preferably calibrated on a pre-established quantity of fluid circulating in the circuit, for example 1 ml.

According to a preferred aspect of the invention, the barrel 3 of the syringe 2 has a tip 31 at the proximal end 3a of the proximal portion 30a of the barrel 3 adapted to receive the second end of the needle 7. The second end 7b of the needle 7 is thus constrained to the tip 31 of the barrel 3 in a position distinct from the opening 4 for the entry and/or exit of fluid. Preferably, the tip 31 of the barrel 3 comprises a seat, not illustrated, adapted to receive and be constrained to the second end 7b of the needle 7. Always preferably, the seat of the tip 31 of the barrel 3 is outside the closed fluid-dynamic circuit.

Preferably, the second end 7b of the needle 7 is constrained to the tip 31 of the barrel 3, and in particular to the seat of the tip 31, by means of an interlocking constraint or, alternatively, by means of a threaded coupling between a threading arranged in the second end 7b of the needle 7 and a similar inner threading arranged inside the tip 31.

According to a preferred aspect of the invention, the barrel 3 comprises a side wall 32 comprising a cylindrical wall 32a, extending axially between the distal end 3b of the distal portion 30b and the proximal end 3a of the proximal portion 30a, and a bottom wall 32b perpendicular to the cylindrical wall 32a. Preferably, the tip 31 is axially projecting from the bottom wall 32b away from the inner cavity 30.

Always preferably, as shown in figure 2, the needle 7, and preferably also the tip 31 and hence the respective seat, is spaced at least from the inner cavity 30 of the barrel 3 and from the diverting means 6 along an axial direction X. Still preferably, the needle 7, and more preferably also the tip 31 and the respective seat, is spaced from the inner cavity 30 of the barrel 3 and from the diverting means 6 along a direction perpendicular to the axial direction X.

Advantageously, therefore, the fluid cannot flow in the needle 7 as the needle 7 is physically separated and spaced from the inner cavity 30 and from the diverting means 6 and fluid-dynamically isolated from the closed fluid-dynamic circuit.

According to the same preferred aspect of the invention, the diverting means 6 comprise a bidirectional valve 61 put in fluid communication with the inner cavity 30 and with the opening 4 and configured to convey the fluid from the inner cavity 30 towards the opening 4 when injected and from the opening 4 to the inner cavity 30 when aspirated. Preferably, the inner cavity 30 is delimited and connected to the valve 61 by means of a flared portion of the diverting means 6 having a funnel shape or a conical shape.

Optionally, the opening 4 of the diverting means 6 is arranged in the side wall 32 of the barrel 3, at the proximal portion 30a. Preferably, the opening 4 is arranged in the cylindrical wall 32a of the side wall 32 of the barrel 3 and, in detail, in a separated position with respect to the tip 31 of the barrel 3.

In alternative embodiments, not illustrated, the opening 4 and/or the diverting means 6 can be positioned, for example, respectively on the bottom wall 32b of the barrel 3 and inside the barrel 3 at the bottom wall 32b and, in detail, in a separated position with respect to the tip 31 of the barrel 3. Alternatively, the opening 4 and/or the diverting means 6 can be positioned at the tip 31 of the barrel 3, in a separated position with respect to the seat of the tip 31 adapted to receive the second end of the needle 7.

In accordance with the preferred embodiment of the invention, the diverting means 6 comprise a connection element 62 adapted to connect the valve 61 to the opening 4. Preferably, the connection element 62 has a tubular elbow shape or an angled shape for connecting the valve 61 to the opening 4 positioned on the cylindrical wall 32a of the side wall 32 of the barrel 3. It should be noted that the closed fluid-dynamic circuit is defined by the inner cavity 30, by the valve 61 and by the connection element 62 of the diverting means 6, by the connection means 9 and by the tank 13.

In accordance with the preferred embodiment of the invention, the connection means 9 comprise a pipe that is at least partly compressible and that has a first end 9b connected to the opening 4 of the diverting means 6 of the barrel 3, and an opposite second end 9c connected to the tank 13. Optionally, the pipe may be compressible along the entire length of the pipe itself. Alternatively, according to the preferred aspect of the invention, the pipe is substantially incompressible and has at least one compressible portion 9a. In the following of the present description, reference will be made to a single compressible portion 9a of the pipe, however embodiments having several consecutive compressible portions are not excluded.

Preferably, the second end 9c of the pipe and part of the pipe itself are positioned inside the container 20. Always preferably, the compressible portion 9a of the pipe is also positioned inside the container 20.

Always preferably, the tank 13 is positioned inside the container 20. Still preferably, the tank 13 comprises a sealing opening, not illustrated, for the entry and/or exit of fluid. It should be noted that the tank 13 is therefore watertight and can be contained in the container 20 and transported without leakages of fluid.

In accordance with the preferred embodiment of the invention, the simulation system 1 comprises an electric motor 15 and a rotating shaft, not illustrated, connected to the electric motor 15 and provided with a cam 15a. Preferably, the processing unit 10 is configured to activate the electric motor 15, which rotates the rotating shaft to move the cam 15a, when activated. In addition, the cam 15a is placed in contact with the pipe of the connection means 9, in particular with the compressible portion 9a of the pipe, and is configured to at least partially throttle the pipe, and in particular the compressible portion 9a. In this way, it is possible to simulate a pre-established resistance provided by the pipe of the connection means 9 to the outflow or inflow from the opening 4 of the barrel 3 of the syringe 2. Always preferably, the electric motor 15, the rotating shaft and the cam 15a are positioned inside a throttling chamber 14 positioned inside the container 20. Still preferably, the throttling chamber 14 and/or the electric motor 15 and/or the rotating shaft and the cam 15a are positioned inside the container 20 and electrically powered.

Preferably, the cam 15a has a profile configured to at least partially throttle the pipe of the connection means 9, in particular the compressible portion 9a of the pipe, according to at least two throttling configurations. Optionally, the cam profile 15a is configured to at least partially throttle the pipe, in detail the compressible portion 9a of the pipe, according to a plurality of throttling configurations. Always preferably, the processing unit 10, and more preferably the control unit, is configured to activate the electric motor 15 and move the cam 15a according to the at least two throttling configurations and, optionally, according to the plurality of throttling configurations.

It should be noted that the simulation system 1 allows various types of liquids to be used depending on the simulation need. However, thanks to the adoption of the cam 15a to simulate different viscosities, it is possible to use within the simulation system 1 fluids that are easily available, reusable and without particular contraindications, such as, for example, water or isopropyl alcohol.

It is worth noting that the profile of the cam 15a allows to simulate at least two different viscosities of the fluid, in such a way as to simulate the injection of a high viscosity filler, such as, for example, hyaluronic acid, or the injection of a low viscosity drug based on botulinum toxin, such as, for example, Botox. In this way, the simulation system 1 is also realistic for simulating the viscosity of the fluid used and the provided resistance to the flow.

According to the preferred embodiment of the invention, the flow monitoring members 11 comprise a flow sensor 11a, also called a flow meter, placed inside the connection means 9 to detect the flow rate and/or speed of the fluid when injected or aspirated by the plunger 5. The flow sensor 11a is preferably placed in signal communication with the processing unit 10, and more preferably the control unit, in order to transmit data relative to the flow of the injected or aspirated fluid.

Preferably, illustrated in figures 1 and 3, the flow sensor 11a is positioned inside the pipe of the connection means 9. Always preferably, the flow sensor 11a is positioned downstream of the throttle of the pipe caused by the cam 15a of the rotating shaft, so as to detect the speed and/or the flow rate of the fluid having a pre-established simulated viscosity. As a result, the flow sensor 11a is preferably placed inside the pipe portion placed inside the container 20.

Always preferably, the processing unit 10 is configured to calculate the volumes of fluid that are injected into the tank or aspirated from the tank through operations integrating input data received from the flow sensor 11a, so as to calculate the amount of fluid injected and/or aspirated during the simulation.

According to a preferred aspect of the invention, the simulation system 1 comprises tracking members 12 in signal communication with the processing unit 10 and configured to track the position and/or the orientation of the needle 7 in space and/or with respect to the synthetic anatomical structure 8. Preferably, the tracking members 12 comprise the spatial tracking sensor 12a for the magnetic kinematic tracking, operatively coupled to the needle 7 and configured to transmit data relative to the position and/or to the orientation of the needle 7, to the processing unit 10, and more preferably, to the control unit. Always preferably, the tracking members 12 comprise an antenna 12b operatively coupled to the synthetic anatomical structure 8 and adapted to generate a magnetic field. Still preferably, the sensor 12a is configured to detect the magnetic field generated by the antenna 12b, acting as a receiver, and to generate a signal relative to the position and/or to the orientation in space of the sensor 12a itself associated with the needle 7 as a function of the detected magnetic field. Furthermore, the sensor 12a is configured to transmit said signal to the processing unit 10, and more preferably, to the control unit.

According to an aspect of the invention, the sensor 12a is connected and constrained to the needle 7. Alternatively, as illustrated in figure 2, the barrel 3 has a seat 12c adapted to receive and be constrained to the sensor 12a operatively coupled to the needle 7.

According to the preferred aspect of the invention, the processing unit 10, and more preferably the control unit, is configured to calculate, in real time and instant by instant, the position of the needle 7 with respect to the synthetic anatomical structure 8 and the position of the needle 7 in space. In greater detail, the processing unit 10, and more preferably the control unit, calculates the position and/or the orientation of the first end 7a of the needle 7, i.e. of the tip of the needle 7, starting from the assumption of stiffness of the needle 7 itself and from the position acquired by the sensor 12a. It should be noted that it is possible to assume no significant deformations of the needle 7 be present during penetration of the synthetic anatomical structure 8 thanks to the reduced dimensions of the needle 7 itself, preferably less than 5 cm. In addition, the processing unit 10, and more preferably the control unit, is configured to calculate, as a function of the information relative to the signal transmitted by the sensor 12a, the speed of insertion of the needle 7 and verify the effective interpenetration with the synthetic anatomical structure 8. Preferably, the control unit is adapted to transmit the acquired and/or calculated information to the simulation unit 16.

Always according to the same aspect, the simulation system 1 further comprises a driver, i.e. a controller, not illustrated, associated with the antenna 12b. Optionally, the driver and the antenna are positioned inside the container 20. Always optionally, the sensor 12a is placed in signal communication with the driver.

In accordance with the preferred embodiment of the invention, shown in figure 2, the simulation system 1 comprises lighting means 18 associated with the needle 7 and placed in signal communication with the processing unit 10, and more preferably with the control unit. Preferably, the lighting means 18 comprise an LED light, not illustrated, associated with the needle 7. Always preferably, the LED light may have different colours, including a red light as a preferred embodiment.

Still preferably, the processing unit 10, and more preferably the control unit, is configured to generate and transmit a first feedback signal to the lighting means 18 to activate the lighting means 18. More preferably, the control unit is configured to generate and transmit the first feedback signal upon receipt of a signal from the simulation unit 16.

In accordance with the preferred embodiment of the invention, the simulation system 1 comprises tactile stimulation means, preferably vibrotactile stimulation means, associated with the syringe 2 and/or wearable by the user U. In detail, the tactile or vibrotactile stimulation means are configured to communicate proprioceptive feedback to the user U.

Preferably, the tactile stimulation means is placed in signal communication with the processing unit 10, and more preferably with the control unit. Always preferably, the processing unit 10, or more preferably the control unit, is configured to generate and transmit a second feedback signal to the tactile stimulation means to activate the tactile stimulation means.

Still preferably, the simulation system 1 comprises sound means, not illustrated, placed in signal communication with the processing unit 10, and more preferably with the control unit, which is configured to generate a third feedback signal and transmit it to the sound means. In detail, the sound means are configured to generate an alarm or feedback sound upon receipt of the third feedback signal. More preferably, the control unit of the processing unit 10 is configured to generate and transmit the second and/or third feedback signal upon receipt of a respective signal from the processing unit 16.

Optionally, the simulation system 1 comprises power supply members, not illustrated, preferably positioned inside the container 20, configured to power and switch on the LED light of the lighting means 18 and/or the tactile stimulation means and/or the sound means. Still optionally, the power supply members may be used to power any electronic component of the simulation system 1, including the sensor 12a of the tracking members 12. Preferably, the power supply members for powering the lighting means 18 and/or the sensor 12a of the tracking members 12 are connected by cable 21 to the lighting means 18 and/or to the sensor 12a, respectively.

According to the preferred embodiment of the invention, shown in figure 3, the simulation system 1 comprises a database 19 placed in signal communication with the processing unit 10, and more preferably with the simulation unit 16 of the processing unit 10, and containing a 3D model representative of the synthetic anatomical structure 8, of the syringe 2, and of the needle 7. It should be noted that the 3D model of the synthetic anatomical structure 8 comprises the single or combined representation of the different layers and tissues of the simulated anatomical structure, including blood vessels, nerves or any anatomical part present in the simulated anatomical structure.

Preferably, as illustrated in figure 3, the simulation system 1 further comprises display means 17 placed in signal communication with the database 19 and with the processing unit 10, or more preferably with the simulation unit 16 of the processing unit 10. Always preferably, the display means 17 comprise one or more of an electronic projection screen, i.e. a monitor or any display, a visor or any projection means for augmented reality or for virtual reality.

It should be noted that the display means 17 are configured to display in real time the 3D model and graphical feedback relative at least to the position of the needle 7 with respect to the synthetic anatomical structure 8 in the 3D model. In detail, the 3D model can be freely rotated, translated or zoomed by the display means 17. Further, the display means 17 are configured to represent one or more of feedback, helper, or supporting graphical effects.

According to a preferred aspect of the invention, the processing unit 10 is configured to use the information relative to at least the position of the needle 7 with respect to the synthetic anatomical structure 8, preferably relative to the position and/or orientation of the needle 7 in space and with respect to the synthetic anatomical structure 8 acquired by the tracking members 12, so as to generate graphical feedback in the 3D model relative to the impact and/or to the interpenetration of the model of the needle 7 in the model of the synthetic anatomical structure 8. Preferably, the simulation unit 16 is configured to receive said information from the control unit and generate said graphical feedback.

Preferably, the processing unit 10, and in particular the simulation unit 16, is configured to represent such graphical feedback in the 3D model through the display means 17. Always preferably, the processing unit 10, and in particular the simulation unit 16, generates and represents the graphical feedback at the end of the simulation or, more preferably, in real time. Advantageously, the user U who carries out the simulation by means of the simulation system 1 can display through the display means 17 any impacts or interpenetrations with vessels, arteries or nerve structures at the end of the simulation or during the same, in order to identify and correct the situations that lead to a failure of the simulation.

Still preferably, the processing unit 10, in particular the control unit upon receipt of a signal from the simulation unit 16, transmits the first feedback signal to the lighting means 18 to activate them, preferably by switching on the red LED light, in order to signal directly on the needle 7 the occurred contact or interpenetration between the needle 7 and any vessels, arteries or nerve structures in the 3D model. Alternatively, or in addition, the processing unit 10, in particular the control unit upon receipt of a respective signal from the simulation unit 16, may transmit the second feedback signal and/or the third feedback signal, respectively, to the tactile stimulation means and/or to the sound means for activating them.

According to a further aspect of the invention, the processing unit 10, in particular the simulation unit 16, can generate a simulation model as a function of the data acquired by the processing unit 10, or in particular by the control unit, during the simulation of the aesthetic medicine treatments carried out by the user U. Preferably, the processing unit 10, in particular the simulation unit 16, can compare the generated simulation model with reference models residing in the database 19, in order to identify a possible deviation of the simulation model from the reference models. In this way, it is possible to evaluate the correctness or failure of the simulation carried out by the user U.

According to the same aspect of the invention, the processing unit 10, in particular the simulation unit 16, is configured to generate a score associated with the simulation model as a function of the comparison with respect to the reference models. Preferably, the score comprises a plurality of parameters relative to one or more of: position of the needle 7 in space, position of the needle 7 with respect to an injection target position inside the simulated synthetic anatomical structure 8, orientation of the needle 7, injection speed, simulation execution time. Always preferably, the processing unit 10, and in particular the simulation unit 16, is configured to generate feedback, as a function of the score associated with the model, relative to the correctness of the simulation and to represent said feedback by means of the display means 17.

According to an aspect of the invention, the processing unit 10, and in particular the simulation unit 16, is configured to generate instructions as a function of the data acquired by the tracking members 12 and/or by the monitoring members 11, and/or of the simulation model and/or by comparison between the simulation model and the reference models, and to graphically represent said instructions through the display means 17 in order to correct the simulation carried out by the respective user U. Preferably, the processing unit 10, in particular the simulation unit 16, is configured to generate instructions at the end of the simulation or, more preferably, in real time.

In accordance with the preferred embodiment of the invention, the processing unit 10, and more preferably the simulation unit 16, is configured to generate feedback scenarios subsequent to the simulation performed and reproduce such scenarios. Preferably, the feedback scenarios comprise changes in the 3D model of the simulated synthetic anatomical structure 8 as a function of the simulation performed and, in detail, of the score and/or of the comparison between the simulation model and the reference models. Such changes comprise, by way of example, effects and consequences that the treatment has on the anatomical structure, including swelling or redness.

Always preferably, the processing unit 10, and more preferably the simulation unit 16, is thus configured to modify the 3D model of the simulated anatomical structure by means of the feedback scenarios in order to represent the effects of the simulation of the treatment carried out.

Alternatively, the feedback scenarios comprise videos representative of the effects of the simulation of the treatment performed. The processing unit 10, in particular the simulation unit 16, is thus configured to reproduce through the display means 17 one or more feedback videos depending on the score associated with the simulation model and/or on the comparison between the simulation model and the reference models.

In accordance with an embodiment of the invention, the database 19 comprises a plurality of models relative to respective aesthetic medicine treatments to be simulated, which can be displayed through the display means 17. Preferably, each model comprises the 3D model of the synthetic anatomical structure 8, of the syringe 2 and of the needle 7. Always preferably, each model further comprises one or more of instructions to be carried out as a function of the treatment to be simulated, helpers or supporting graphical effects as a function of the treatment to be simulated, guides on the procedure to be performed to simulate the treatment, feedback scenarios relative to the treatment to be simulated. Still preferably, such models are individually selectable by the user U at the beginning of the simulation of an aesthetic medicine treatment through the display means 17.

A further object of the present invention is a method for simulating aesthetic medicine treatments by means of a simulation system 1 according to the present description.

Preferably, the method comprises the step of selecting, through the display means 17, the respective model relative to the aesthetic medicine treatment to be simulated.

Therefore, the method comprises the step of inserting some fluid into the barrel 3 of the syringe 2 and/or into the tank 13. Preferably, the method initially provides for calibrating the simulation system 1 on a pre-established amount of fluid, for example 1 ml, to allow an initial suction of fluid and a consequent injection of fluid by means of the syringe 2, as illustrated in the following of the present description.

The method further comprises the step of penetrating the synthetic anatomical structure 8 by at least the first end 7a of the needle 7 constrained to the barrel 3 of the syringe 2. Preferably, this step provides for the step of inserting a pre-established length of the needle 7 into the synthetic anatomical structure 8 as a function of the optimal depth associated with the aesthetic medicine treatment to be simulated.

Preferably, the method therefore provides for monitoring at least the position of the needle 7 with respect to the synthetic anatomical structure 8. Always preferably, the method provides for monitoring by means of the processing unit 10 the data acquired by the tracking members 12 relative to the position and to the orientation of the needle 7 in space and with respect to the synthetic anatomical structure 8 and to the depth of interpenetration of the needle 7 with respect to the synthetic anatomical structure 8. Always preferably, the method provides for displaying through the display means 17 the graphical feedback relative to the position and orientation of the needle 7 in space and with respect to the synthetic anatomical structure 8 in the 3D model.

The method therefore comprises the step of aspirating some fluid from the tank 13 inside the barrel 3 through the connection means 9 by axially sliding the plunger 5 towards the distal portion 30b of the barrel 3. It should be noted that this step corresponds to the simulation of a suction prior to the actual injection.

Therefore, the method comprises the step of injecting some fluid from the barrel 3 inside the tank 13 through the connection means 9 by sliding the plunger 5 towards the proximal portion 30a of the barrel 3.

The method therefore provides for monitoring by the processing unit 10 the data relative to the flow relative to the injection and/or to the aspiration of fluid acquired by the monitoring members 11.

The method therefore comprises the step of extracting the first end 7a of the needle 7 from the synthetic anatomical structure 9.

Preferably, the method comprises the further step of evaluating at the end of the simulation by the processing unit 10, in particular by the simulation unit 16, the comparison between the simulation model and the reference models. This step provides for controlling the score and/or the feedback generated as a function of the score associated with the simulation model.

Finally, the method preferably provides for displaying the feedback scenarios relative to the simulation effects reproduced by the processing unit 10, in particular by the simulation unit 16, through the display means 17.

## Claims

1. Simulation system (1) for aesthetic medicine treatments, comprising:
- a syringe (2) comprising a barrel (3) adapted to receive and contain fluid and having a proximal portion (30a) comprising an opening (4) for the entry and/or the exit of fluid and a proximal end (3a), an opposite distal portion (30b) and an inner cavity (30) defined between the proximal portion (30a) and the distal portion (30b), and a plunger (5) axially slidable inside the barrel (3) towards the proximal portion (30a) for injecting the fluid exiting the barrel through the opening (4) for the entry and/or exit of fluid of the barrel (3) or towards the distal portion (30b) for aspirating the fluid inside the barrel (3) through the opening (4) of the barrel (3);
- a needle (7) extending between a first sharp end (7a) and an opposite second end (7b) constrained to the proximal end (3a) of the proximal portion (30a) of the barrel (3);
- a puncturable synthetic anatomical structure (8), the needle (7) being configured to at least partially penetrate the synthetic anatomical structure (8) by means of the first sharp end (7a),
- a processing unit (10);
- wherein the barrel (3) comprises flow diverting means (6) extending inside the proximal portion (30a) to put the inner cavity (30) in fluid communication with the opening (4),
**characterized in that:**
- the needle (7) is separated from the inner cavity (30) and the diverting means (6) of the barrel (3), the inner cavity (30) and the diverting means (6) being fluid-tight with respect to the needle (7), the second end (7b) of the needle (7) being constrained in a position distinct from the opening (4);
**and in that it further comprises:**
- a tank (13) configured to contain a predefined amount of fluid;
- connection means (9) connected to the tank (13) and to the opening (4) and configured to put the inner cavity (30) of the barrel (3) in fluid communication with the tank (13);
- flow monitoring means (11) in signal communication with the processing unit (10) and configured to monitor the flow relative to the injection and/or to the aspiration of fluid through the opening (4).

2. Simulation system (1) according to claim 1, wherein the inner cavity (30) and the diverting means (6) of the barrel (3), the connection means (9) and the tank (13) define a closed fluid-dynamic circuit, the needle (7) being outside the closed fluid-dynamic circuit.

3. Simulation system (1) according to claim 1 or 2, wherein the proximal end (30a) of the barrel (3) comprises a tip (31) adapted to receive and be constrained to the second end (7b) of the needle (7), the needle (7) and the tip (31) being spaced at least along an axial direction (X) from the inner cavity (30) of the barrel (3) and from the diverting means (6), the opening (4) of the diverting means (6) being arranged in a side wall (32) of the barrel (3) at the proximal portion (30a) in a position distinct from the tip (31).

4. Simulation system (1) according to any one of claims 1 to 3, wherein the diverting means (6) comprise a bidirectional valve (61) placed in fluid communication with the inner cavity (30) and with the opening (4) and configured to convey the fluid from the inner cavity (30) towards the opening (4) when injected and from the opening (4) to the inner cavity (30) when aspirated.

5. Simulation system (1) according to any one of claims 1 to 4, wherein the connection means (9) comprise a pipe that is at least partly compressible and having a first end (9b) connected to the opening (4) of the diverting means (6) of the barrel (3), and an opposite second end (9c) connected to the tank (13).

6. Simulation system (1) according to claim 5, comprising an electric motor (15) and a rotating shaft connected to the electric motor (14) and provided with a cam (15a), wherein:
- the processing unit (10) is configured to activate the electric motor (15), the electric motor (15) being adapted to rotate the rotating shaft to move the cam (15a), and
- the cam (15a) is placed in contact with the pipe of the connection means (9) and is configured to at least partially throttle the pipe.

7. Simulation system (1) according to any one of claims 1 to 6, wherein the tank (13) comprises a sealing opening for inserting and removing the predetermined amount of fluid.

8. Simulation system (1) according to any one of claims 1 to 7, wherein the flow monitoring members (11) comprise a flow sensor (11a) placed inside the connection means (9) and in signal communication with the processing unit (10), the flow sensor (11a) being configured to detect the flow rate and/or the speed of the fluid when injected or aspirated by the plunger (5).

9. Simulation system (1) according to any one of claims 1 to 8, comprising tracking members (12) in signal communication with the processing unit (10) and configured to track the position and/or the orientation of the needle (7) with respect to the synthetic anatomical structure (8), the tracking members (12) comprising an antenna (12b) operatively coupled with the synthetic anatomical structure (8) and adapted to generate a magnetic field, a spatial tracking sensor (12a) operatively coupled to the needle (7) and configured to detect the magnetic field generated by the antenna (12b), generate a signal relative to the position and/or to the orientation of the sensor (12a) with respect to the synthetic anatomical structure (8) as a function of the detected magnetic field and transmit said signal to the processing unit (10).

10. Simulation system (1) according to any one of the preceding claims, comprising:
- a database (19) placed in signal communication with the processing unit (10) and containing a 3D model representative of the synthetic anatomical structure (8), of the syringe (2) and of the needle (7);
- display means (17) placed in signal communication with the database (19) and with the processing unit (10), the display means (17) being configured to display in real time the 3D model and a graphical feedback relative at least to the position of the needle (7) with respect to the synthetic anatomical structure (8) in the 3D model.

11. Simulation system (1) according to any one of the preceding claims, comprising at least one of:
- lighting means (18) associated with the needle (7) and placed in signal communication with the processing unit (10), the processing unit (10) being configured to generate and transmit a first feedback signal to the lighting means (18) to activate the lighting means (18),
- tactile stimulation means associated with the syringe (2) and/or wearable by a user (U), the tactile stimulation means being placed in signal communication with the processing unit (10), the processing unit (10) being configured to generate and transmit a second feedback signal to the tactile stimulation means to activate the tactile stimulation means.

12. Method for simulating aesthetic medicine treatments by a simulation system (1) according to any one of the preceding claims, comprising the steps of:
- inserting fluid into the barrel (3) of the syringe (2) and/or into the tank (13);
- penetrating the synthetic anatomical structure (8) by at least the first end (7a) of the needle (7) constrained to the barrel (3) of the syringe (2);
- aspirating some fluid from the tank (13) inside the barrel (3) through the connection means (9) by axially sliding the plunger (5) towards the distal portion of the barrel (30b);
- injecting some fluid from the barrel (3) inside the tank (13) through the connection means (9) by sliding the plunger (5) towards the proximal portion (30a) of the barrel (3);
- monitoring the flow relative to the injection and/or to the aspiration of fluid by means of the monitoring members (11);
- extracting the first end (7a) of the needle (7) from the synthetic anatomical structure (9).

## Patentansprüche

1. Simulationssystem (1) für Behandlungen in der ästhetischen Medizin, umfassend:
- eine Spritze (2), umfassend einen Zylinder (3), der zum Aufnehmen und Enthalten von Fluid angepasst ist, und einen proximalen Abschnitt (30a) aufweist, der eine Öffnung (4) für den Eintritt und/oder den Austritt von Fluid und ein proximales Ende (3a) umfasst, einen gegenüberliegenden distalen Abschnitt (30b) und einen inneren Hohlraum (30), der zwischen dem proximalen Abschnitt (30a) und dem distalen Abschnitt (30b) definiert ist, und einen Kolben (5), der innerhalb des Zylinders (3) in Richtung des proximalen Abschnitts (30a) axial verschiebbar ist, um das aus dem Zylinder durch die Öffnung (4) für den Eintritt und/oder Austritt von Fluid aus dem Zylinder (3) austretende Fluid zu injizieren oder in Richtung des distalen Abschnitts (30b), um das Fluid innerhalb des Zylinders (3) durch die Öffnung (4) des Zylinders (3) abzusaugen;
- eine Nadel (7), die sich zwischen einem ersten scharfen Ende (7a) und einem gegenüberliegenden zweiten Ende (7b) erstreckt, das an das proximale Ende (3a) des proximalen Abschnitts (30a) des Zylinders (3) gedrängt ist;
- eine durchstechbare synthetische anatomische Struktur (8), wobei die Nadel (7) dazu konfiguriert ist, die synthetische anatomische Struktur (8) mithilfe des ersten scharfen Endes (7a) zumindest teilweise zu durchdringen;
- eine Verarbeitungseinheit (10);
- wobei der Zylinder (3) Strömungsumlenkmittel (6) umfasst, die sich innerhalb des proximalen Abschnitts (30a) erstrecken, um den inneren Hohlraum (30) in Fluidverbindung mit der Öffnung (4) zu bringen,
**dadurch gekennzeichnet, dass:**
- die Nadel (7) von dem inneren Hohlraum (30) und dem Umlenkmittel (6) des Zylinders (3) getrennt ist, wobei der innere Hohlraum (30) und das Umlenkmittel (6) in Bezug auf die Nadel (7) fluiddicht sind, wobei das zweite Ende (7b) der Nadel (7) in einer von der Öffnung (4) getrennten Position gehalten wird;
**und dadurch, dass es ferner Folgendes umfasst:**
- einen Tank (13), der dazu konfiguriert ist, eine vordefinierte Menge an Fluid zu enthalten;
- Verbindungsmittel (9), die mit dem Tank (13) und der Öffnung (4) verbunden und dazu konfiguriert sind, den inneren Hohlraum (30) des Zylinders (3) in Fluidverbindung mit dem Tank (13) zu bringen;
- Durchflussüberwachungsmittel (11), die in Signalverbindung mit der Verarbeitungseinheit (10) stehen und dazu konfiguriert sind, den Durchfluss in Bezug auf die Injektion und/oder die Ansaugung von Fluid durch die Öffnung (4) zu überwachen.

2. Simulationssystem (1) nach Anspruch 1, wobei der innere Hohlraum (30) und das Umlenkmittel (6) des Zylinders (3), die Verbindungsmittel (9) und der Tank (13) einen geschlossenen fluiddynamischen Kreislauf definieren, wobei sich die Nadel (7) außerhalb des geschlossenen fluiddynamischen Kreislaufs befindet.

3. Simulationssystem (1) nach Anspruch 1 oder 2, wobei das proximale Ende (30a) des Zylinders (3) eine Spitze (31) umfasst, die angepasst ist, um das zweite Ende (7b) der Nadel (7) aufzunehmen und mit diesem verbunden zu sein, die Nadel (7) und die Spitze (31) zumindest entlang einer axialen Richtung (X) von dem inneren Hohlraum (30) des Zylinders (3) und von dem Umlenkmittel (6) beabstandet sind, wobei die Öffnung (4) des Umlenkmittels (6) in einer Seitenwand (32) des Zylinders (3) an dem proximalen Abschnitt (30a) in einer von der Spitze (31) verschiedenen Position angeordnet ist.

4. Simulationssystem (1) nach einem der Ansprüche 1 bis 3, wobei das Umlenkmittel (6) ein bidirektionales Ventil (61) umfasst, das in Fluidverbindung mit dem inneren Hohlraum (30) und mit der Öffnung (4) steht und dazu konfiguriert ist, das Fluid von dem inneren Hohlraum (30) zu der Öffnung (4) zu leiten, wenn es injiziert wird, und von der Öffnung (4) zu dem inneren Hohlraum (30), wenn es angesaugt wird.

5. Simulationssystem (1) nach einem der Ansprüche 1 bis 4, wobei die Verbindungsmittel (9) ein Rohr umfassen, das zumindest teilweise komprimierbar ist und ein erstes Ende (9b) aufweist, das mit der Öffnung (4) des Umlenkmittels (6) des Zylinders (3) verbunden ist, und ein gegenüberliegendes zweites Ende (9c), das mit dem Tank (13) verbunden ist.

6. Simulationssystem (1) nach Anspruch 5, umfassend einen Elektromotor (15) und eine rotierende Welle, die mit dem Elektromotor (14) verbunden und mit einem Nocken (15a) bereitgestellt ist, wobei:
- die Verarbeitungseinheit (10) zum Aktivieren des Elektromotors (15) konfiguriert ist, wobei der Elektromotor (15) angepasst ist, die rotierende Welle zu drehen, um den Nocken (15a) zu bewegen, und
- der Nocken (15a) in Kontakt mit dem Rohr des Verbindungsmittels (9) steht und dazu konfiguriert ist, das Rohr zumindest teilweise zu drosseln.

7. Simulationssystem (1) nach einem der Ansprüche 1 bis 6, wobei der Tank (13) eine Verschlussöffnung zum Einfüllen und Entnehmen der vorbestimmten Menge an Fluid umfasst.

8. Simulationssystem (1) nach einem der Ansprüche 1 bis 7, wobei die Durchflussüberwachungselemente (11) einen Durchflusssensor (11a) umfassen, der innerhalb der Verbindungsmittel (9) angeordnet ist und in Signalverbindung mit der Verarbeitungseinheit (10) steht, wobei der Durchflusssensor (11a) dazu konfiguriert ist, die Durchflussrate und/oder die Geschwindigkeit des Fluids zu erfassen, wenn es durch den Kolben (5) injiziert oder angesaugt wird.

9. Simulationssystem (1) nach einem der Ansprüche 1 bis 8, umfassend Verfolgungselemente (12), die in Signalverbindung mit der Verarbeitungseinheit (10) stehen und dazu konfiguriert sind, die Position und/oder die Ausrichtung der Nadel (7) in Bezug auf die synthetische anatomische Struktur (8) zu verfolgen, wobei die Verfolgungselemente (12) eine Antenne (12b) umfassen, die operativ mit der synthetischen anatomischen Struktur (8) gekoppelt und angepasst ist, ein Magnetfeld zu erzeugen, einen räumlichen Verfolgungssensor (12a), der operativ mit der Nadel (7) gekoppelt und dazu konfiguriert ist, das von der Antenne (12b) erzeugte Magnetfeld zu erfassen, ein Signal in Bezug auf die Position und/oder die Ausrichtung des Sensors (12a) in Bezug auf die synthetische anatomische Struktur (8) in Abhängigkeit von dem erfassten Magnetfeld zu erzeugen und das Signal an die Verarbeitungseinheit (10) zu übertragen.

10. Simulationssystem (1) nach einem der vorstehenden Ansprüche, umfassend:
- eine Datenbank (19), die in Signalverbindung mit der Verarbeitungseinheit (10) steht und ein 3D-Modell enthält, das repräsentativ für die synthetische anatomische Struktur (8), die Spritze (2) und die Nadel (7) ist;
- Anzeigemittel (17), die in Signalverbindung mit der Datenbank (19) und mit der Verarbeitungseinheit (10) stehen, wobei die Anzeigemittel (17) dazu konfiguriert sind, in Echtzeit das 3D-Modell und eine grafische Rückmeldung bezüglich zumindest der Position der Nadel (7) in Bezug auf die synthetische anatomische Struktur (8) in dem 3D-Modell anzuzeigen.

11. Simulationssystem (1) nach einem der vorstehenden Ansprüche, umfassend mindestens eines von:
- Beleuchtungsmittel (18), das der Nadel (7) zugeordnet ist und in Signalverbindung mit der Verarbeitungseinheit (10) steht, wobei die Verarbeitungseinheit (10) dazu konfiguriert ist, ein erstes Rückmeldesignal zu erzeugen und an das Beleuchtungsmittel (18) zu übertragen, um das Beleuchtungsmittel (18) zu aktivieren,
- taktiles Stimulationsmittel, das der Spritze (2) zugeordnet ist und/oder von einem Benutzer (U) getragen werden kann, wobei das taktile Stimulationsmittel in Signalverbindung mit der Verarbeitungseinheit (10) gebracht wird, wobei die Verarbeitungseinheit (10) dazu konfiguriert ist, ein zweites Rückmeldesignal zu erzeugen und an das taktile Stimulationsmittel zu übertragen, um das taktile Stimulationsmittel zu aktivieren.

12. Verfahren zum Simulieren von Behandlungen in der ästhetischen Medizin durch ein Simulationssystem (1) nach einem der vorstehenden Ansprüche, umfassend die folgenden Schritte:
- Einführen von Fluid in den Zylinder (3) der Spritze (2) und/oder in den Tank (13);
- Durchdringen der synthetischen anatomischen Struktur (8) durch mindestens das erste Ende (7a) der Nadel (7), die an den Zylinder (3) der Spritze (2) gedrängt wird;
- Ansaugen von etwas Fluid aus dem Tank (13) im Inneren des Zylinders (3) durch das Verbindungsmittel (9), indem der Kolben (5) axial in Richtung des distalen Abschnitts des Zylinders (30b) verschoben wird;
- Injizieren von etwas Fluid aus dem Zylinder (3) im Inneren des Tanks (13) durch das Verbindungsmittel (9), indem der Kolben (5) in Richtung des proximalen Abschnitts (30a) des Zylinders (3) verschoben wird;
- Überwachen des Durchflusses relativ zu der Injektion und/oder der Ansaugung von Fluid mittels der Überwachungselemente (11);
- Herausziehen des ersten Endes (7a) der Nadel (7) aus der synthetischen anatomischen Struktur (9).

## Revendications

1. Système de simulation (1) pour des traitements de médecine esthétique, comprenant :
- une seringue (2) comprenant un cylindre (3) adapté pour recevoir et contenir du fluide et ayant une partie proximale (30a) comprenant une ouverture (4) pour l'entrée et/ou la sortie du fluide et une extrémité proximale (3a), une partie distale opposée (30b) et une cavité interne (30) définie entre la partie proximale (30a) et la partie distale (30b), et un piston (5) coulissant axialement à l'intérieur du cylindre (3) vers la partie proximale (30a) pour injecter le fluide sortant du cylindre à travers l'ouverture (4) pour l'entrée et/ou la sortie du fluide du cylindre (3) ou vers la partie distale (30b) pour aspirer le fluide à l'intérieur du cylindre (3) à travers l'ouverture (4) du cylindre (3) ;
- une aiguille (7) s'étendant entre une première extrémité pointue (7a) et une seconde extrémité opposée (7b) contrainte à l'extrémité proximale (3a) de la partie proximale (30a) du cylindre (3) ;
- une structure anatomique synthétique perforable (8), l'aiguille (7) étant configurée pour pénétrer au moins partiellement dans la structure anatomique synthétique (8) au moyen de la première extrémité pointue (7a) ;
- une unité de traitement (10) ;
- dans lequel le cylindre (3) comprend des moyens de déviation de flux (6) s'étendant à l'intérieur de la partie proximale (30a) pour mettre la cavité intérieure (30) en communication fluidique avec l'ouverture (4),
**caractérisé en ce que :**
- l'aiguille (7) est séparée de la cavité interne (30) et des moyens de déviation (6) du cylindre (3), la cavité interne (30) et les moyens de déviation (6) étant étanches aux fluides par rapport à l'aiguille (7), la seconde extrémité (7b) de l'aiguille (7) étant contrainte dans une position distincte de l'ouverture (4) ;
**et caractérisé en ce qu'il comprend en outre** :
- un réservoir (13) configuré pour contenir une quantité prédéfinie de fluide ;
- des moyens de connexion (9) reliés au réservoir (13) et à l'ouverture (4) et configurés pour mettre la cavité interne (30) du cylindre (3) en communication fluidique avec le réservoir (13) ;
- des moyens de surveillance de débit (11) en communication de signal avec l'unité de traitement (10) et configurés pour surveiller le débit par rapport à l'injection et/ou à l'aspiration de fluide à travers l'ouverture (4).

2. Système de simulation (1) selon la revendication 1, dans lequel la cavité interne (30) et les moyens de déviation (6) du cylindre (3), les moyens de connexion (9) et le réservoir (13) définissent un circuit fermé de dynamique des fluides, l'aiguille (7) étant à l'extérieur du circuit fermé de dynamique des fluides.

3. Système de simulation (1) selon la revendication 1 ou 2, dans lequel l'extrémité proximale (30a) du cylindre (3) comprend une pointe (31) adaptée pour recevoir et être contrainte à la seconde extrémité (7b) de l'aiguille (7), l'aiguille (7) et la pointe (31) étant espacées au moins le long d'une direction axiale (X) de la cavité interne (30) du cylindre (3) et des moyens de déviation (6), l'ouverture (4) des moyens de déviation (6) étant disposée dans une paroi latérale (32) du cylindre (3) au niveau de la partie proximale (30a) dans une position distincte de la pointe (31).

4. Système de simulation (1) selon l'une quelconque des revendications 1 à 3, dans lequel les moyens de déviation (6) comprennent une vanne bidirectionnelle (61) placée en communication de fluide avec la cavité interne (30) et avec l'ouverture (4) et configurée pour transporter le fluide de la cavité interne (30) vers l'ouverture (4) lorsqu'elle est injectée et de l'ouverture (4) à la cavité interne (30) lorsqu'elle est aspirée.

5. Système de simulation (1) selon l'une quelconque des revendications 1 à 4, dans lequel les moyens de connexion (9) comprennent un tuyau qui est au moins partiellement compressible et ayant une première extrémité (9b) reliée à l'ouverture (4) des moyens de déviation (6) du cylindre (3), et une seconde extrémité opposée (9c) reliée au réservoir (13).

6. Système de simulation (1) selon la revendication 5, comprenant un moteur électrique (15) et un arbre rotatif relié au moteur électrique (14) et muni d'une came (15a), dans lequel :
- l'unité de traitement (10) est configurée pour activer le moteur électrique (15), le moteur électrique (15) étant adapté pour faire tourner l'arbre rotatif pour déplacer la came (15a), et
- la came (15a) est placée en contact avec le tuyau du moyen de connexion (9) et est configurée pour étrangler au moins partiellement le tuyau.

7. Système de simulation (1) selon l'une quelconque des revendications 1 à 6, dans lequel le réservoir (13) comprend une ouverture d'étanchéité pour insérer et retirer la quantité prédéterminée de fluide.

8. Système de simulation (1) selon l'une quelconque des revendications 1 à 7, dans lequel les éléments de surveillance de débit (11) comprennent un capteur de débit (11a) placé à l'intérieur des moyens de connexion (9) et en communication de signal avec l'unité de traitement (10), le capteur de débit (11a) étant configuré pour détecter le débit et/ou la vitesse du fluide lorsqu'il est injecté ou aspiré par le piston (5).

9. Système de simulation (1) selon l'une quelconque des revendications 1 à 8, comprenant des éléments de suivi (12) en communication de signal avec l'unité de traitement (10) et configurés pour suivre la position et/ou l'orientation de l'aiguille (7) par rapport à la structure anatomique synthétique (8), les éléments de suivi (12) comprenant une antenne (12b) couplée de manière opérationnelle à la structure anatomique synthétique (8) et adaptée pour générer un champ magnétique, un capteur de suivi spatial (12a) couplé de manière opérationnelle à l'aiguille (7) et configuré pour détecter le champ magnétique généré par l'antenne (12b), générer un signal par rapport à la position et/ou à l'orientation du capteur (12a) par rapport à la structure anatomique synthétique (8) en fonction du champ magnétique détecté et transmettre ledit signal à l'unité de traitement (10).

10. Système de simulation (1) selon l'une quelconque des revendications précédentes, comprenant :
- une base de données (19) placée en communication de signal avec l'unité de traitement (10) et contenant un modèle 3D représentatif de la structure anatomique synthétique (8), de la seringue (2) et de l'aiguille (7) ;
- des moyens d'affichage (17) placés en communication de signal avec la base de données (19) et avec l'unité de traitement (10), les moyens d'affichage (17) étant configurés pour afficher en temps réel le modèle 3D et une rétroaction graphique relative au moins à la position de l'aiguille (7) par rapport à la structure anatomique synthétique (8) dans le modèle 3D.

11. Système de simulation (1) selon l'une quelconque des revendications précédentes, comprenant au moins l'un parmi :
- des moyens d'éclairage (18) associés à l'aiguille (7) et placés en communication de signal avec l'unité de traitement (10), l'unité de traitement (10) étant configurée pour générer et transmettre un premier signal de rétroaction aux moyens d'éclairage (18) pour activer les moyens d'éclairage (18),
- des moyens de stimulation tactile associés à la seringue (2) et/ou pouvant être porté par un utilisateur (U), les moyens de stimulation tactile étant placés en communication de signal avec l'unité de traitement (10), l'unité de traitement (10) étant configurée pour générer et transmettre un second signal de rétroaction au moyen de stimulation tactile pour activer les moyens de stimulation tactile.

12. Procédé de simulation de traitements de médecine esthétique par un système de simulation (1) selon l'une quelconque des revendications précédentes, comprenant les étapes consistant à :
- insérer un fluide dans le cylindre (3) de la seringue (2) et/ou dans le réservoir (13) ;
- pénétrer dans la structure anatomique synthétique (8) par au moins la première extrémité (7a) de l'aiguille (7) contrainte au cylindre (3) de la seringue (2) ;
- aspirer un peu de fluide du réservoir (13) à l'intérieur du cylindre (3) à travers les moyens de connexion (9) en faisant glisser axialement le piston (5) vers la partie distale du cylindre (30b) ;
- injecter un peu de fluide à partir du cylindre (3) à l'intérieur du réservoir (13) à travers les moyens de connexion (9) en faisant glisser le piston (5) vers la partie proximale (30a) du cylindre (3) ;
- surveiller le débit relatif à l'injection et/ou à l'aspiration de fluide au moyen des éléments de surveillance (11) ;
- extraire la première extrémité (7a) de l'aiguille (7) de la structure anatomique synthétique (9).
